# EUROPEAN PATENT APPLICATION

(11) **EP 2 765 781 A1**
(43) Date of publication of application: **13.08.2014**
(21) Application number: 13305151.6
(22) Date of filing: 07.02.2013
(51) Int. Cl.: H04N 21/234, H04N 21/2343, H04N 21/258, H04N 5/272

(54) **Method for providing targetable content in images of a video sequence and corresponding device**

(71) Applicant: Thomson Licensing, 92130 Issy-les-Moulineaux (FR)
(72) Inventor: Straub, Gilles, 35576 Cesson Sévigné (FR); Le Scouarnec, Nicolas, 35576 Cesson Sévigné (FR); Neumann, Christoph, 35576 Cesson Sévigné (FR); Onno, Stéphane, 35576 Cesson Sévigné (FR)
(74) Representative: Perrot, Sébastien

(57) **Abstract**

The present invention provides a scalable and cost-effective solution for targeting images in a video sequence to individual users according to user preferences.

## Description

### 1. Field of invention.

The present invention relates to the field of insertion of targeted content into a video.

### 2. Technical background.

Targeting of audio/video content to users allows a user to be served with content that is interesting to him, and allows a content provider to create extra revenues, generated from customers whose actions are influenced by the targeted content. Targeted content exists in multiple forms, such as advertisement breaks that are inserted in broadcasted content. But with the advent of DVR's or PVR's (Digital Video Recorders / Personal Video Recorders) and TV replay and time shift functions, users are more and more inclined to watch 'On Demand' TV, where they have access to trick modes such as fast forward. It is then easy to skip advertisement breaks. Therefore, embedding advertisements in image zones of a video content is now considered as being an interesting option. This technique allows for example to inlay a bill board with advertisements in a sequence of video images, the bill board with its advertisement being adapted to the setting of the images so that it seems to be an integral part of it. In many cases, inlaying content even requires human intervention, needs important computing resources, requires that the entire video content is prepared in advance, and is further expensive. Then, targeting of advertisements to groups of users becomes difficult and costly to realize. Targeting content to individual users even becomes infeasible due to poor scalability of prior art.

It would therefore be desirable to be able to propose a solution that is scalable and cost-effective enough to allow targeting individual users.

### 3. Summary of the invention.

The purpose of this invention is to solve the problem discussed in the technical background section by means of a method and device of providing and of receiving targetable content in images of a video sequence.

The current invention comprises a method of providing targetable content in images of a video sequence implemented in a server device, the method comprising a step of receiving a request for transmission of the video sequence; a step of transmission of a play list comprising identifiers of parts of the video sequence, the parts comprising generic parts that are destined for any user, and targetable parts that are personalizable for a user at the origin of the request for transmission, through content inlay; a step of receiving a request for transmission of a part from the play list; and if the request for transmission of a part from the play list relates to transmission of a generic part, transmission of the generic part; wheras if the request for transmission of a part from the play list relates to transmission of a targetable part, transmission of a personalized part that corresponds to the targetable part that is personalized by inlaying, in images of the targetable part, inlayable content that is chosen as a function of the at least a preference of the user.

According to a variant embodiment of the method of providing targetable content in images of a video sequence implemented in a server device, the method further comprises a step of choosing of content for inlaying according to the at least a preference of the user and according to metadata associated to the targetable part and according to metadata associated to content for inlaying; and a step of inlaying chosen inlay content into images of the targetable part so as to obtain the personalized part.

According to a variant embodiment of the method of providing targetable content in images of a video sequence implemented in a server device, upon a generation of the play list, a batch process is created for personalization of targetable parts that are present in the play list.

According to a variant embodiment of the method of providing targetable content in images of a video sequence implemented in a server device, personalized parts are stored in cache.

According to a variant embodiment of the method of providing targetable content in images of a video sequence implemented in a server device, upon receipt of the request for transmission of a targetable part, a corresponding personalized part is fetched from a cache if it is determined that a personalized part exists in the cache that is suitable for the user according to the at least a user preference.

According to a variant embodiment of the method of providing targetable content in images of a video sequence implemented in a server device, the method further comprises, upon receipt of the request for transmission of a targetable video part from the play list, a step of determination if a personalized video part exists in cache that is suitable for the user according to the at least a user preference, and if it is determined that such personalizable part does not exists in the cache, launching of an immediate generation of the personalized part.

According to a variant embodiment of the method of providing targetable content in images of a video sequence implemented in a server device, upon receipt of the request for transmission of a targetable part, a stored default personalized part is transmitted if it is determined that a time needed for providing a personalized part exceeds a maximum delay time, a default personalized part being a targetable part in which inlayable content is inlayed that is chosen without taking into account the at least a user preference.

According to a variant embodiment of the method of providing targetable content in images of a video sequence implemented in a server device, the generic parts and the targetable parts are encoded according to different encoding formats.

According to a variant embodiment of the method of providing targetable content in images of a video sequence implemented in a server device, the encoding format of the targetable parts differs from the generic parts in that the targetable parts are encoded using a lower compression rate than the generic parts.

According to a variant embodiment of the method of providing targetable content in images of a video sequence implemented in a server device, the identifiers are Uniform Resource Locators.

The current invention also relates to a method of receiving targeted content in images of a video sequence implemented in a server device, the method being implemented in a receiver device, the method comprising a step of transmitting a request for receiving the video sequence; a step of receiving of a play list comprising identifiers of parts of the video sequence, the parts comprising generic parts that are destined for any user, and targetable parts that are personalized for a user of the receiver device according to at least a user preference of the user, by inlaying, in images of the targetable parts, inlayable content that is chosen as a function of the at least user preferences of the user; and a step of transmission of requests for receiving parts of the video sequence from the play list; and reception of requested parts.

The invention further relates to a server device for providing targetable content in images of a requested video sequence, the device comprising a play list determinator for determining a list of parts of the requested video sequence, the list comprising identifiers of generic parts of the video sequence that are destined for any user, and targetable parts that are personalizable for a user through content inlay in images of the targetable parts; and a content inlayer, for choosing inlayable content as a function of at least a user preference and inlaying chosen inlayable content the in images of the targetable parts.

The invention further relates to a receiver device for receiving targeted content in a video sequence, the device comprising a transmitter for transmitting a request for receiving the video sequence; and a receiver for receiving of a play list comprising identifiers of parts of the video sequence, the parts comprising generic parts that are destined for any user, and targetable parts that are personalized for a user of the receiver device according to at least a preference of the user, thereby obtaining personalized parts, the targetable parts comprising images in which content is inlayed as a function of the at least a preference of the user; and a transmitter for transmission of requests for receiving parts of the sequence from the list; and a receiver for reception of requested parts.

The discussed advantages and other advantages not mentioned in this document will become clear upon the reading of the detailed description of the invention that follows.

### 4. List of figures.

More advantages of the invention will appear through the description of particular, non-restricting embodiments of the invention. The embodiments will be described with reference to the following figures:
**Figure 1** illustrates an image of a video where content is inlayed according to the invention.
**Figure 2** illustrates some aspects of the method of the invention.
**Figure 3** is an example of data that comes into play when providing targetable content in images of a video according to the invention.
**Figure 4** is an architecture for a delivery platform according to a particular embodiment of the invention.
**Figure 5** is a flow chart of a particular embodiment of the method of providing targetable content in images if a video sequence according to the invention.
**Figure 6** is an example embodiment of a server device for providing targetable content in images of a requested video sequence.
**Figure 7** is an example embodiment of a receiver device implementing the method of the invention of receiving targetable content in images of a video sequence.

### 5. Detailed description of the invention.

In the following, a distinction is made between "generic" parts of a video, "targetable" parts, and "targeted" or "personalized" parts. A "part" is a sequence of images of a video. A "generic" part is a part that is destined to many users without distinction, i.e. it is the same for all users. A "targetable" part is a part that can be targeted, or personalized, for a single user according to user preferences. This targeting or personalizing is carried out by inlaying targeted content (i.e. content that specifically targets a single user) in images that are comprised in the targetable video part. Once the inlay operation has been carried out, the targetable video part is said to have become a "targeted" or "personalized" part.

In the following, the term 'video sequence' means a sequence of images, when played one after the other, makes a video. Example of a video sequence is (a part of) a movie, a broadcast program, a streamed video, or a Video on Demand. A video sequence may comprise audio, such as for example the audio track(s) that relate to and that are synchronized with the images of the video track.

In the following, term 'inlay' is used in the context of inlaying content in video. Inlay means that one or more images of a video are modified by incrustation inside the one or more images of the video of one or several texts, images, or videos, or any combination of these. Examples of content that can be inlayed are: text that is inlayed on a plain surface appearing in one or more images of the video; still image of a billboard advertisement, including the image of the billboard, inlayed in a sequence of images of the video; or even a video comprising advertisement, inlayed in a billboard that is present in a sequence of images in the video. Inlay is not insertion. Insertion is characterized by adding images to a video, for example, adding images related to a commercial break in a video, without modifying the images of the video sequence. Traditionally, inlaying content in a video sequence is much more demanding in terms of required computing resources than mere image insertion. In many cases, inlaying content even requires human intervention. It is one of the objectives of the current invention to propose a solution for providing targeted content in a video sequence where human intervention is not needed during an operational phase. The invention therefore proposes a preparation phase, where a video sequence is cut into parts that can receive targeted content, and where the parts that can receive targeted content are prepared to receive the targeted content, where metadata is created that will serve during a second, automated and operational phase, where personalized content is chosen and inlayed in the prepared parts. Then, any human intervention is reduced to the preparational phase, whereas the work done in this preparational phase is profitable for providing many different parts of the video sequence as these can be personalized lateron, when needed, according to for example user preferences. Then, the solution of the invention advantageously allows optimization of the workflow.

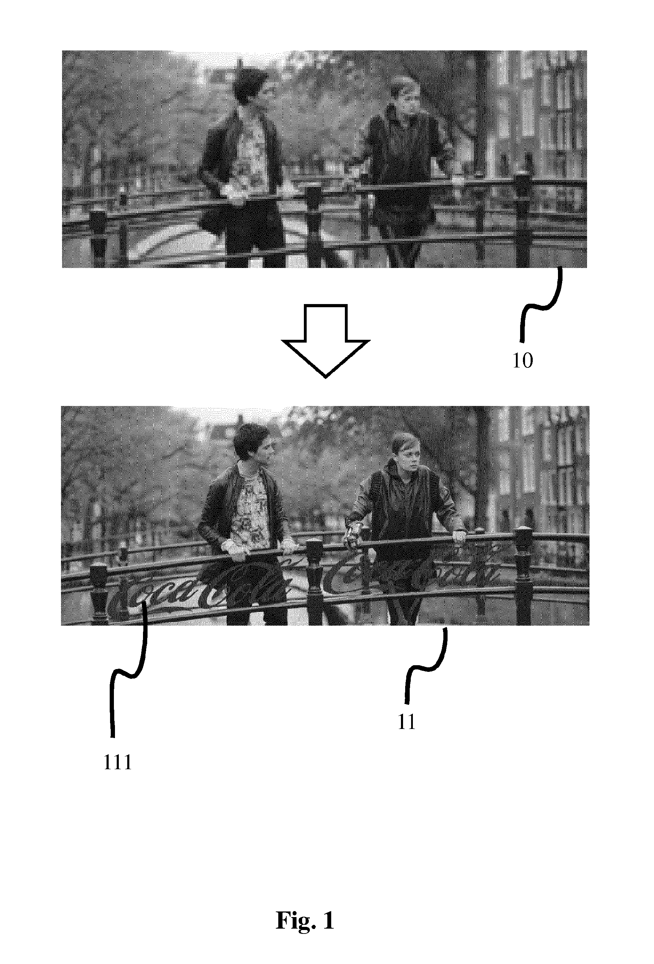

**Figure 1** illustrates an image of a video where content is inlayed according to the invention. Image 10 represents the original image. Image 11 represents a personalized image. Element 111 represents an image that is inlayed in image 11 for personalization.

The method of the invention comprises the use of metadata that is for example prepared during an "offline" preparation step. Two major groups of metadata exist. A first group of metadata comprises information that is required to carry out content inlay operations. For the generation of the metadata, video parts are determined that are suitable for content inlay, i.e. image sequences and image zones are identified in the video which are suitable for content inlay. For each identified image sequence, metadata is generated that is required for a content inlay operation. This metadata is for example related to parameters such as image numbers, and for each image in the identified image sequence, coordinates of the inlay zone inside the image, geometrical distortion of the inlay zone, color map used, light setting. A second group of metadata provides information that is required for selection of appropriate content to inlay in a given video sequence. This metadata comprises therefore information about the content itself, the context of the scene (period, culture,...), the distance of a virtual camera. The offline preparation step results in the generation of metadata that is related to content inlay in the video and that will be used for the selection of the appropriate content to inlay and for the inlay process itself. The second group of metadata is associated to both inlayable content and to targetable video sequences and describes these. Together with the user profile, the second group of metadata is used to select appropriate inlayable content to be used for inlaying in a particular video sequence.

In a first embodiment, at least some user preferences are required as an input for the method of the invention of providing targetable content in images of a video, in addition to the video.

According to a variant embodiment, the video is encoded (if the original video that is input to the method was not encoded) or re-encoded (if the original video was already encoded) in such a manner that each identified sequence starts with a GOP (Group Of Pictures). This allows for smooth decoding in a receiver when the sequences are decoded one after another.

In a variant embodiment, the video is (re-)encoded during the preparation operation, to be optimized for its use. For example, generic parts are (re-)encoded with an encoding format that is optimized for transport over a network using a high compression rate, whereas targetable parts are encoded in an intermediate (or mezzanine) format, that allows decoding, content inlay, and re-encoding without significant quality loss. The lower compression rate for the mezzanine format allows further edition in the video (such as part replacement) to work better as the video will be of higher quality. Therefore the results (after edition) will have a better quality. However, a drawback of a lower compression rate is that it results in higher transport bit rate as the mezzanine format comprises more data for a same video sequence duration than the generic parts. A preferred mezzanine format based on H.264 is under discussion by different manufacturers that are regrouped in the EMA (Entertainment Merchants Association), and it will probably become a recommended standard. One of the characteristics of the mezzanine format is that it principally uses a closed GOP format which eases editing and smooth playback. Preferably, both generic and targetable parts are encoded such that a video part starts with a plain GOP (i.e. starting with an I-frame) when Inter/intra compression is used, so as to ensure that a decoder can decode the first picture of each part. Another characteristic of the proposed mezzanine format is that it uses a lower compression ratio as previously discussed, that results in targetable video parts (using the mezzanine format) having a higher transport bit rate than generic parts when transmitted over a network.

The metadata and, according to the variant embodiment used, the (re-) encoded video, are stored for later use.

Now when a user device requests a video sequence, a "play list" or "manifest" of generic and targetable video parts is generated and then transmitted to the user. The play list comprises information that identifies the different video parts and a server location from which the video parts can be obtained, for example as a list of URLs (Uniform Resource Locators). According to a particular embodiment of the invention, these URLs are self-contained, and a URL uniquely identifies a video part and comprises all information that is required to fetch a particular video part; for example, the self-contained URL comprises a unique targetable video part identifier, and a unique inlayable content identifier. This particular embodiment is advantageous for the scalability of the system because it allows to separate the various components of the system and scale them as needed. According to a variant embodiment, the URLs are not self-contained but rather comprise identifiers that refers to entries in a data base that stores all information needed to fetch an identified video part. During the step of play list generation, it is determined, using the first and the second group of metadata and the user profile, which inlayable content is to be inlayed in which targetable part, and this information is encoded in the URLs. User profile information is for example collected from data such as buying behavior, Internet surfing, or other consumer behavior. This user profile is used to choose from a list of inlayable contents that match with these user preferences (for example, advertisements that are related to his buying behavior, or advertisements that are related to shops in his immediate neighborhood, or announcements for events such as theatre or cinema in his neighborhood that corresponds to his personal taste) and that match with the targetable video part.

For the video parts that are 'generic', these parts can be provided without further computing by a content server, however according to a variant some computing may be required in order to adapt the part for transport over the network that interconnects the user device and the server or to monitor the video consumption of users. For the video parts that are targetable, content is inlayed using the previously discussed first group of metadata. According to a particular embodiment of the present invention, this inlay operation can be done by a video server that has specific computational resources to do a just-in-time insertion i.e., the just-in-time computing meaning that the personalized content is computed at the moment when targeted content is requested by a user.

According to yet another variant, the process of inlaying content is started in advance, for example during a batch process that is launched upon generation of the play list, or that is launched later whenever computing resources become available.

According to yet another variant embodiment of the invention, targetable video sequences that are personalized in advance, for example in batch like process, are stored in memory such as a cache. The cache is implemented as RAM, hard disk drive, or any other type of storage, offered by one or more storage servers. Advantageously, this batch preparation is done upon generation of the play list.

Even if the generation of a targeted video sequence is programmed in a batch, there might not remain enough time to wait for the batch end. Such a situation can occur when a user uses a trick mode such as fast forward, or the batch generation is evolving too slowly due to unavailability of requested resources. In such a case, and according to a variant embodiment of the invention, the requested targeted video part is generated 'on the fly' (and is removed from the batch).

According to a variant embodiment of the invention that relates to the previously discussed batch process, a delay is determined that is available for preparing of the personalized video parts. For example, considering the rendering point of a requested video sequence, there might be enough time to personalize targetable parts on low cost, lesser performant computing resources, whereas if the rendering point approaches a targetable part, more costly computing resources with better availability and higher performance are required to be able to prepare a personalized part in time. Doing so advantageously reduces computing costs. The determination of the delay is done using information on the consumption times of a requested video sequence and the video bit rate. For example, if a user requests a video sequence and requests a first video part at T0, it can be calculated using a known bit rate of the video sequence that at T0+n another video part will probably be requested (under the hypothesis that the video sequence is consumed linearly, i.e. without using trick modes).

As mentioned previously, a personalized part can be stored on a storage server (for example, in a cache memory) to serve other users because it might happen that that a same personalized part would convene to other users (for example, multiple users might be targeted the same way because they are interested in announcements of a same cinema in a same neighborhood). The decision to store or not to store can be taken by analyzing user profiles for example and searching for common interests. For example, if many users are interested in cars of a particular make, it might be advantageous in terms of resource management to take a decision to store.

According to a variant embodiment of the invention, when the player requests a targetable video part which does not already exists in cache and there is not enough left for on the fly generation, or the on the fly generation fails for any reason (network problem, device failure, ...) a fall back solution is taken in which a default version of the targeted video part is provided in stead of a personalized part. Such a default version is for example a version with a default advertisement or without advertisement.

According to a variant embodiment of the present invention, the user device that requests the video has enough computational resources to do the online inlay operation itself. In this case the inlayable content (such as advertisements) that can be chosen from, are for example stored on the user device, or, according to a variant embodiment, stored on another device, for example a dedicated advertisement server.

Advantageously, a "redirection" server is used to redirect a request for a specific targetable part to a storage server or cache if it is determined that a targetable part has already been prepared that convenes to a user that issues the request.

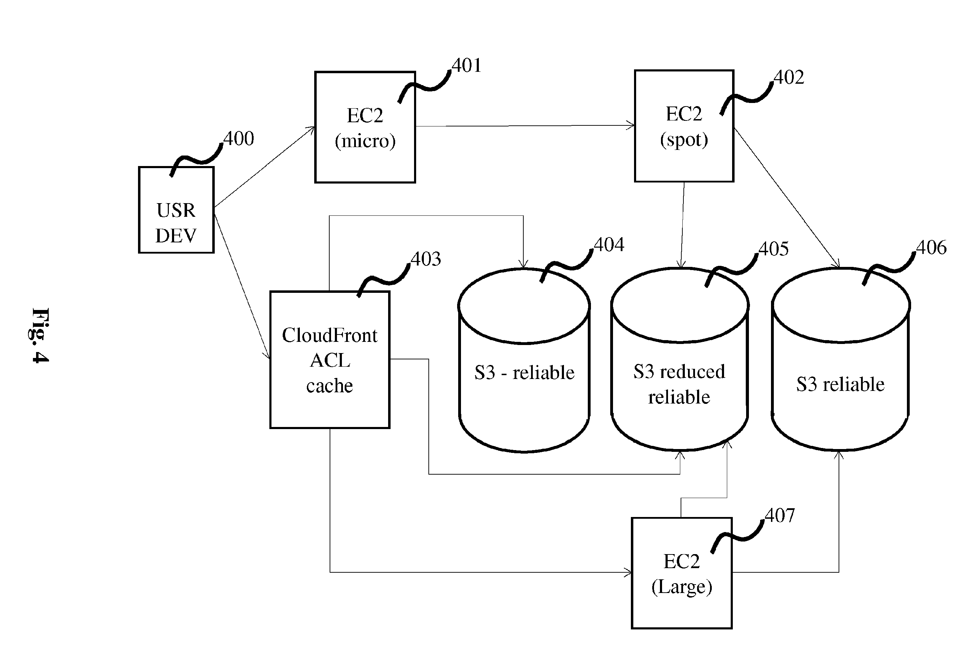

According to a variant embodiment, the method of the invention is implemented by cloud computing means, see Figure 4 and its explanation.

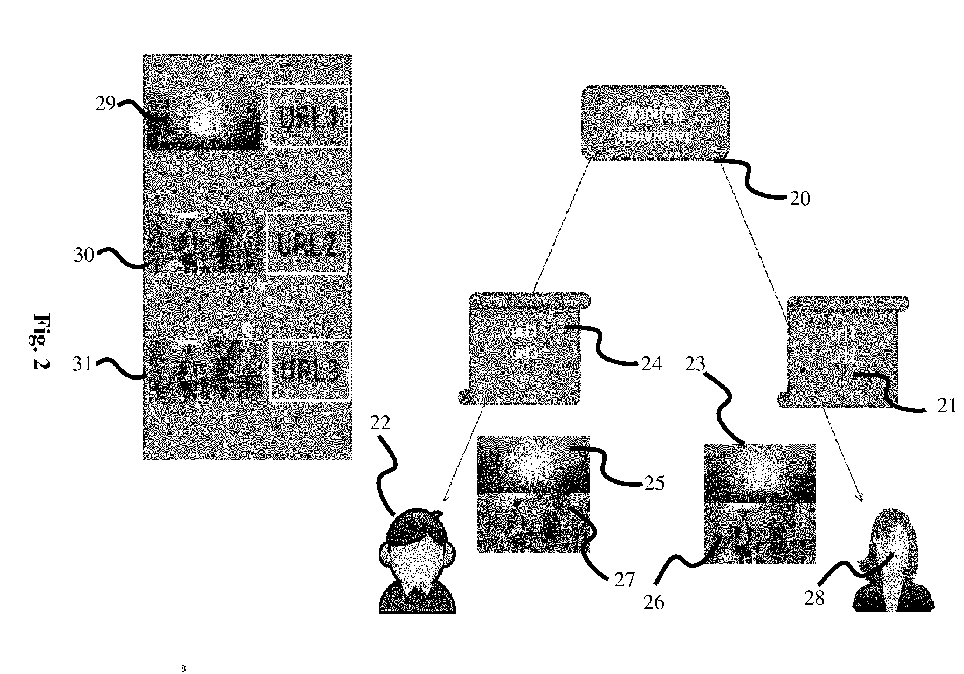

**Figure 2** illustrates some aspects of the method of providing of targetable content in images of a video according to the invention. According to the scenario used for this figure, there are two users, a user 22 and a user 28. Each receive parts of a video that are targeted to / personalized for them. URL1 points to generic video part 29 that is the same for all users. URL3 points to a targeted/personized part (a publicity is inlayed in the bridge railing). URL2 points to a same targetable video part as URL3 where no inlayable content is inlayed. User 22 receives a manifest 24 that comprises URL1 and URL3. User 28 receives a manifest 21 that comprises URL1 and URL2. URL3 points to a batch prepared personalized content, that was stored in cache because of its likely use for multiple users as it comprises an advertisement of a well known brand of soda.

Advantageously, all URLs point to a redirection server that redirects, at the time of the request of that URL, either to a server able to compute the targeted part, or to a cache server which can serve a stored targeted part. The stored targeted part having being either a batch prepared personalized content, or a content prepared previously for another user and stored.

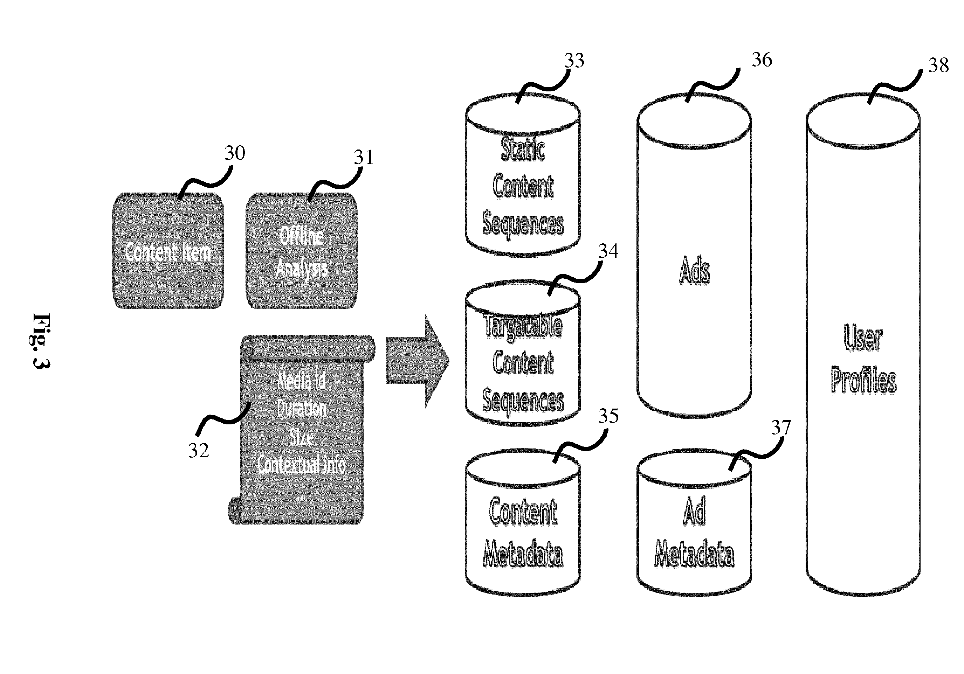

**Figure 3** shows an example of data that comes into play when providing targetable content in images of a video according to the invention. A content item 30 i.e. a video is analyzed in an offline process (31). Metadata (32) is created. The analyze process results in the division of the video in generic video parts (33) and in targetable video parts (34), and for the targetable parts, metadata (35) is created that is associated to images of the targetable parts and that are used during inlay of content in the images of the targetable parts during a later phase. Further data that can be used during the process of providing targetable content is targetable parts such as advertisements (36) and metadata related to these targetable parts (37) as well as user profiles (38). The metadata describes the targetable parts through information needed for an inlay operation, such as image size, form factor, level of allowed holomorphic transformation, textual description, etc.The user profiles are used to choose a content for inlay for example one of the advertisements (37).

**Figure 4** depicts an architecture for a delivery platform according to a particular embodiment of the invention using cloud computing. Cloud computing is more and more used for distribution of computing intensive tasks over a network of devices. It can leverage the method of the invention of providing targetable content in images of a video. Cloud computing services are proposed by several companies like Amazon, Microsoft or Google. In such a computing environment, computing services are rent or bought, and tasks are dynamically allocated to devices so that resources match the computing needs. This allows flexible resource management. Typically, prices are established per second of computation and/or per byte transferred. According to the described particular embodiment of the invention, the flexible computing platform that is offered by cloud computing is used to offer targetable content in images of a video, through dynamic inlay of content at consumption time. A set of video sequences, a set of inlay content (such as advertisements) and a set of user profiles are available as input data. The video sequences are analyzed offline (preprocessed) and metadata is created as explained for Figure 3. Now, appropriate inlay content must be inlayed in targetable parts of the video sequence when the video sequence is requested by a user. Using a cloud computing platform allows then for the system to be fully scalable to demand growth. Such a cloud based method for providing targetable content in images of a video may comprise the following steps:
(i) video preprocessing for identification of targetable video parts and generic video parts. During this step, metadata is created that is associated to images of the targetable parts and that are used during inlay of content in the images of the targetable parts during a later phase. Optionally and further during this step, the generic parts are encoded using a compact encoding format that is optimized for transport, whereas the targetable parts are encoded using a less compact encoding format that is however suited for editing, typically referred to as the previously discussed mezzanine format.
(ii) storing of the encoded parts (i.e. generic and targetable) in a cloud (e.g. Amazon S3). This cloud can be public or private.
(iii) storing of content destined for inlay in the targetable video parts in the cloud (private or public), together with associated metadata that describes the content and that can be used in a later phase for the content insertion.
(iv) maintaining a set of user profiles to be used for content targeting. These user profiles can be either stored in the public cloud or for privacy reasons, stored on a private cloud or on a user device.
(v) generation of a manifest upon request for a video sequence, and transmission to the requester. The manifest file comprises links (e.g. URLs to the parts of the video sequence (i.e. targetable and generic parts).
(vi) transmission of the different video parts listed in the manifest upon request, for example by a video player. Generic parts are provided from storage. Personalized parts are either provided from cache memory when suitable parts exists for the particular user for which the part is destined, or are calculated 'on the fly', whereby previously preselected inlay content may be inlayed if such preselected inlay content exists.

Personalizing a targetable part comprises:
- decoding the targetable part;
- inlaying a selected inlayable content in the targetable part, thereby obtaining a "targeted" or "personalized" part;
- encoding the targeted part, preferably using an encoding format that is optimized for transport, and transmitting the targeted part. To further optimize resource use needed for processing, if cache space is available, then storage in cache of the processed targetable part can be stored in cache so that processing the targetable part can be avoided when the part is required for another user (for example, for users having similar user profiles). Likewise, references (links) to selected inlayable content can be stored, which can be retrieved later on as previously discussed.

Figure 4 depicts an example cloud architecture used for implementation of a particular embodiment of the invention based on Amazon Web Services (AWS). For the current invention particularly of interest are computing instances such as EC2 (Elastic Compute Cloud) for running of computational tasks (targetization, content inlay, user profile maintenance, manifest generation), storage instances such as S3 (Simple Storage Service) for storage of data such as generic parts and targetable parts, metadata, and CloudFront for data delivery. According to Amazon terminology, EC2 is a web service that provides sizeable computation capacity and offers a virtual computing environment for different kinds of operating systems and for different kinds of "instance" configurations. Typical instance configurations are "EC2 standard" or "EC2 micro". The "EC2 micro" instance is well suited for lower throughput applications and web sites that require additional compute cycles periodically. There are different ways of getting ressources in AWS. The first way, refered as "on demand" provides the guarantee that resources will be made available at a given price. The second mode, referred as "spot' allows to get ressources at a cheaper price but with no guarantee of availability. EC2 Spot instances allow to obtain a price for EC2 computing capacity by a bidding mechanism. These instances can significantly lower computing costs for time-flexible, interruption-tolerant tasks. Prices are often significantly less than on-demand prices for the same EC2 instance types. S3 provides a simple web services interface that can be used to store and retrieve any amount of data any time. Storage space price depends on the reliability that is wished, for example standard storage with high reliability and reduced redundancy storage for storing non-critical, reproducible data. CloudFront is a web service for content delivery and integrates with other AWS services to distribute content to end users with low latency and high data transfer speeds and can be used for streaming of content. In figure 4, element 400 depicts a user device, such as a Set Top Box, PC, tablet, or mobile phone. Reliable S3 404 is used for storing of generic parts and targetable parts. Reduced reliable S3 (405) is used for storing targeted/personalized parts that can easily be recomputed. Reduced reliable S3 (405) is used as a cache, in order to keep computed targeted/personalized parts for some time in memory. Reliable S3 406 is used for storing targetable parts in a mezzanine format, advertisements or inlay content, and metadata. EC2 spot instances 402 are used to pre-compute targeted/personalized video parts. This computation by the EC2 spot instances, that can be referred to as 'batch' generation, is for example triggered upon the manifest generation. On-demand EC2 Large instances (407) is used to realize 'on the fly' or 'realtime' inlaying of content. Generation of a targeted part is done as follows: a targetable part is retrieved from S3 reliable (406), in mezzanine format, the targetable part is decoded, an inlay content is chosen, inlayed in images of the targetable part, and the personalized part are re-encoded in a transport format. Depending on previously mentioned 'on the fly' or 'batch' computing of the targeted part, the decoding of the targetable parts, choosing of inlay content, the inlaying and the re-encoding is either done in respectively an EC2 spot instance (402) or in an EC2 large instance (407). Of course, this described variant is only one of several strategies that are possible. Other strategies may comprise using different EC2 instances (micro, medium or large for example) for either one of 'on the fly' or 'batch' computing depending on different parameters such as delay, task size and computing instance costs, such that the use of these instances is optimized to offer a cost-effective solution with a good quality of service. The computed targeted part is then stored in reduced reliable S3 (405) that is used as a cache in case of 'batch' computing, or directly served from EC2 large 407 and optionally stored in reduced reliable S3 405 in case of 'on the fly' computing. Batch computing of targeted parts is preferable for reasons of computing cost if time is available to do so. Therefore a good moment to start batch computing of targeted parts is when the manifest is generated. However if a user fast forwards to a targetable part that has not been computed yet, more costly 'on the fly' computing is required. Now if a player on the device 400 requests video parts, a previously discussed redirection server (not shown) verifies where the requested part can be obtained, for example from reliable S3 (404) if the requested part is a generic part, from reduced reliable S3 if the requested part is a targetable part that is already available in cache, from EC2 large (407) for 'on the fly' generation if the requested part is a part that is not available in cache. According to where the part can be requested, the redirection server redirects the device 400 to the correct entity for obtaining it. Advantageously, the device 400 is not served directly from EC2/S3 but through a CDN/proxy such as CloudFront 403 that streams video parts to the device 400. In short, targeted content can be provided from three sources with different URLs:
- precomputed and available in reduced reliable S3 (405) that serves a as a cache area;
- computed on the fly by EC2 Large (407);
- as a fall-back solution, from reliable S3 (404) without content inlay (which is strictly speaking not 'targeted');
- as another fallback solution, from reduced reliable S3 (405) with an inlayed content that does not strictly correspond to the user profile.

Thus, the player on device 400 requests a single URL, and is redirected to one of the sources discussed above.

The URLs in the manifest comprise all the information that is required for the system of figure 4 to obtain targeted content from each of these three sources in a way that is transparent to the user device that requests the URLs listed in the manifest.

While the above example is based on Amazon cloud computing architecture, the reader of this document will understand that the example above can be adapted to cloud computing architectures that are different from the above without departing from the described inventive concept.

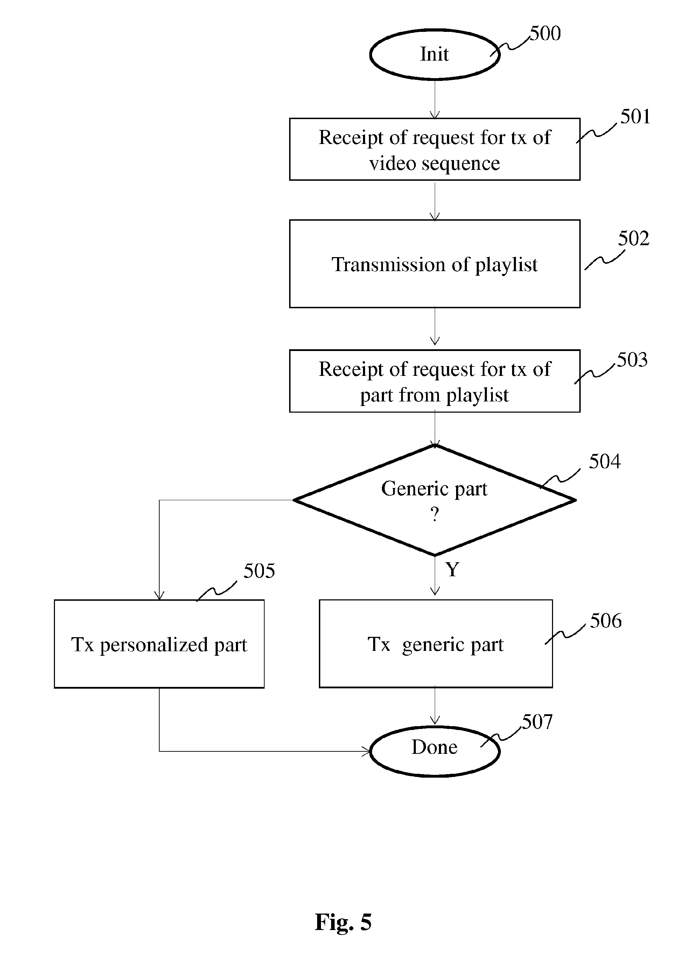

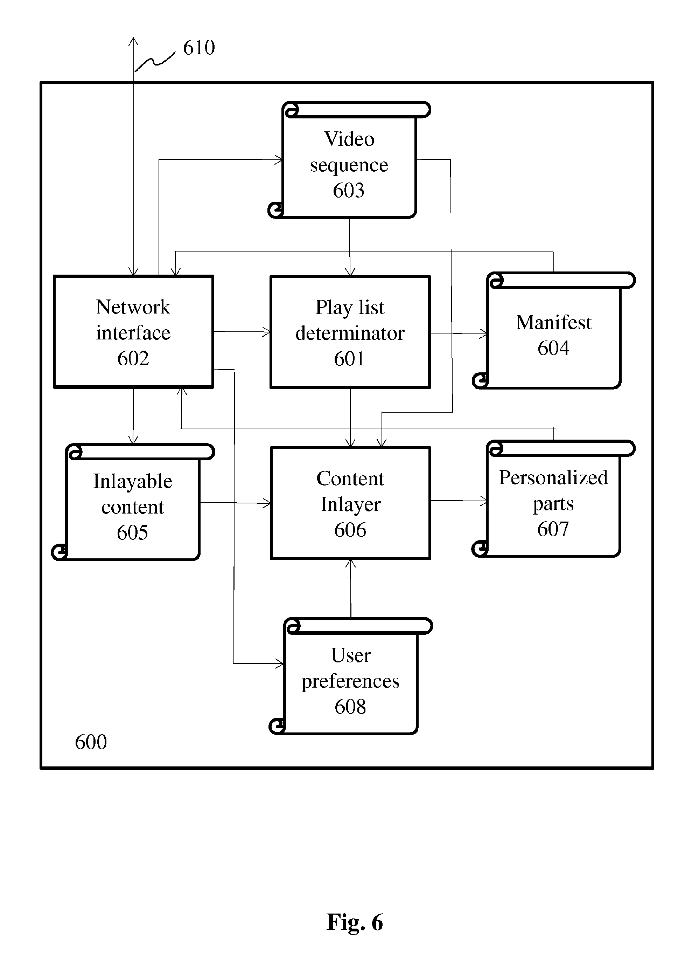

**Figure 5** illustrates a flow chart of a particular embodiment of the method of the invention. In a first initialization step 500, variables are initialized for the functioning of the method. When the method is implemented in a device such as server device 600 of figure 6, the step comprises for example copying of data from non-volatile memory to volatile memory and initialization of memory. In a step 501, a request for transmission of a video sequence is received. In a step 502, a play list is transmitted that comprises comprising identifiers of generic and targetable parts of the requested video sequence, the generic parts being destined for any user, and the targetable parts are personalizable for a user at the origin of the request for transmission, through content inlay. In a step 503, a request is received fro transmission of a part from the play list. In a step 504, it is determined if the request is related to a generic part or to a targetable part. If the request is related to a generic part, the generic part is transmitted in a step 506, and the method ends in a step 507. If the request is related to a targetable part, a personalized part is transmitted in a step 505 that corresponds to the targetable part that is personalized by inlaying, in images of the targetable part, inlayable content that is chosen as a function of said at least a preference of the user that is at the origin of the request for transmission of the video sequence. The flow chart of figure 5 is for illustrative purposes and the method of the invention is not necessarily implemented as such. Other possibilities of implementation comprise the parallel execution of steps or batch execution.

**Figure 6** shows an example embodiment of a server device 600 for providing targetable content in images of a requested video sequence.

The device comprises a play list determinator 601, a content inlayer 606, a network interface 602, and uses data such as video sequences 603, inlayable content 605, and user preferences 608, whereas it produces play list 604, and personalized parts 607. The input content is stored locally or received via the network interface that is connected to a network via connection 610. The output is stored locally or transferred immediately on the network, for example to an external storage device. Requests for video sequences are received via the network interface. The references to generic parts and targetable parts are provided to the play list determinator that determines a list of parts of a requested video sequence. This list comprises identifiers of generic parts of the video sequence that are destined to any user, and targetable parts that are personalizable for a particular user, through content inlay in images of the targetable parts. For the targetable parts referenced in the play list, the content inlayer chooses inlayable content as a function of at least a user preference and inlays the chosen inlayable content in images of the targetable parts, thereby obtaining personalized parts 607 that are transmitted to a requester of a targetable part via the network interface.

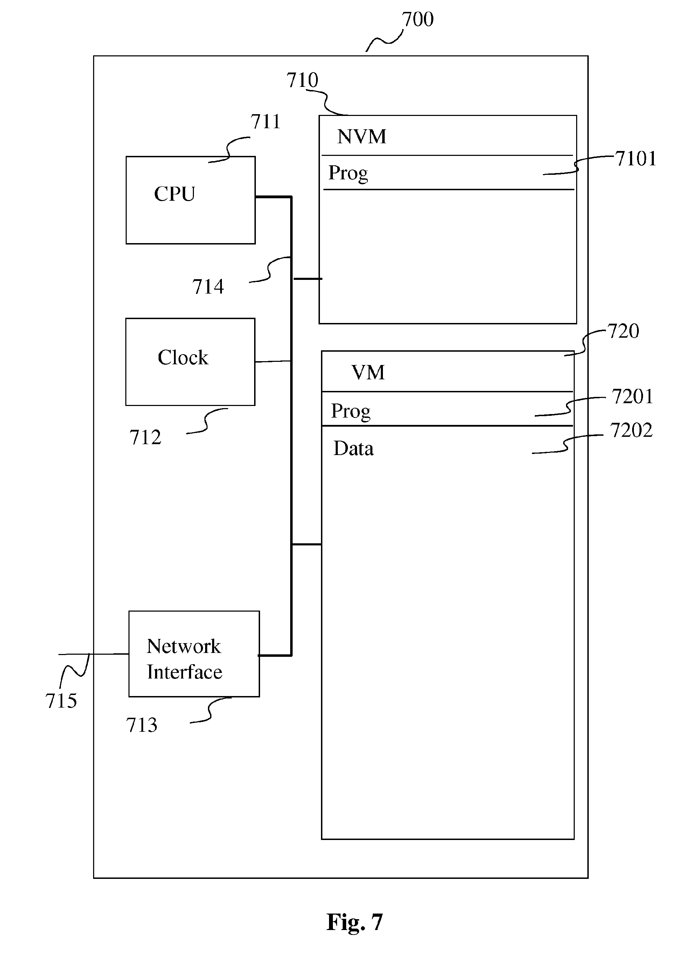

**Figure 7** shows an example embodiment of a receiver device implementing the method of the invention of receiving targetable content in images of a video sequence. The device 700 comprises the following components, interconnected by a digital data- and address bus 714:
- a processing unit 711 (or CPU for Central Processing Unit);
- a non-volatile memory NVM 710 ;
- a volatile memory VM 720 ;
- a clock unit 712, providing a reference clock signal for synchronization of operations between the components of the device 700 and for other timing purposes;
- a network interface 713, for interconnection of device 700 to other devices connected in a network via connection 715.

It is noted that the word "register" used in the description of memories 710 and 720 designates in each of the mentioned memories, a low-capacity memory zone capable of storing some binary data, as well as a high-capacity memory zone, capable of storing an executable program, or a whole data set.

Processing unit 711 can be implemented as a microprocessor, a custom chip, a dedicated (micro-) controller, and so on. Non-volatile memory NVM 710 can be implemented in any form of non-volatile memory, such as a hard disk, non-volatile random-access memory, EPROM (Erasable Programmable ROM), and so on. The Non-volatile memory NVM 710 comprises notably a register 7201 that holds a program representing an executable program comprising the method according to the invention. When powered up, the processing unit 711 loads the instructions comprised in NVM register 7101, copies them to VM register 7201, and executes them.

The VM memory 720 comprises notably:
- a register 7201 comprising a copy of the program 'prog' of NVM register 7101 ;
- a register 7202 comprising read/write data that is used during the execution of the method of the invention, such as the user profile.

In this embodiment, the network interface 713 is used to implement the different transmitter and receiver functions of the receiver device.

According to a particular embodiment of the server and the receiver devices according to the invention, these devices comprises dedicated hardware for implementing the different functions that are provided by the steps of the method. According a variant embodiment of the server and the receiver devices according to the invention, these devices are implemented using generic hardware such as a personal computer. According to yet another embodiment of the server and the receiver devices according to the invention, these devices are implemented through a mix of generic hardware and dedicated hardware. According to particular embodiments, the server and the receiver device are implemented in software running on a generic hardware device, or implemented as a mix of soft- and hardware modules.

Other device architectures than illustrated by figure 6 and 7 are possible and compatible with the method of the invention. Notably, according to variant embodiments, the invention is implemented as a mix of hardware and software, or as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer, each of the means implemented in hardware, software or a mix of these, in same or different soft- or hardware modules.

## Claims

1. A method of providing targetable content in images of a video sequence implemented in a server device, the method being **characterized in that** it comprises the following steps:
receiving (501) a request for transmission of said video sequence;
transmission (502) of a play list comprising identifiers of parts of said video sequence, the parts comprising generic parts that are destined for any user, and targetable parts that are personalizable for a user at the origin of said request for transmission, through content inlay;
receiving (503) a request for transmission of a part from said play list;
if said request for transmission of a part from said play list relates to transmission of a generic part, transmission (506) of the generic part;
if said request for transmission of a part from said play list relates to transmission of a targetable part, transmission (505) of a personalized part that corresponds to said targetable part that is personalized by inlaying, in images of the targetable part, inlayable content that is chosen as a function of said at least a preference of said user.

2. The method according to Claim 1, further comprising steps of:
choosing of content for inlaying according to said at least a preference of said user and according to metadata associated to the targetable part and according to metadata associated to content for inlaying; and
inlaying chosen inlay content into images of the targetable part so as to obtain said personalized part.

3. The method according to Claim 1 or 2, wherein, upon a generation of said play list, a batch process is created for personalization of targetable parts that are present in said play list.

4. The method according to any of Claims 1 to 3, wherein personalized parts are stored in cache.

5. The method according to any of Claims 1 to 4, wherein, upon receipt of said request for transmission of a targetable part, a corresponding personalized part is fetched from a cache if it is determined that a personalized part exists in said cache that is suitable for said user according to said at least a user preference.

6. The method according to any of Claims 1 to 5, wherein the method further comprises, upon receipt of said request for transmission of a targetable video part from said play list, a step of determination if a personalized video part exists in cache that is suitable for said user according to said at least a user preference, and if it is determined that such personalizable part does not exists in said cache, launching of an immediate generation of said personalized part.

7. The method according to any of Claims 1 to 6, wherein, upon receipt of said request for transmission of a targetable part, a stored default personalized part is transmitted if it is determined that a time needed for providing a personalized part exceeds a maximum delay time, a default personalized part being a targetable part in which inlayable content is inlayed that is chosen without taking into account said at least a user preference.

8. The method according to any of Claims 1 to 7, wherein said generic parts and said targetable parts are encoded according to different encoding formats.

9. The method according to any of Claims 1 to 8, wherein said encoding format of said targetable parts differs from said generic parts in that said targetable parts are encoded using a lower compression rate than said generic parts.

10. The method according to any of Claims 1 to 9, wherein said identifiers are Uniform Resource Locators.

11. A method of receiving targeted content in a video sequence, the method being implemented in a receiver device, said method being **characterized in that** it comprises steps of:
transmitting a request for receiving said video sequence;
receiving of a play list comprising identifiers of parts of said video sequence, the parts comprising generic parts that are destined for any user, and targetable parts that are personalized for a user of said receiver device according to at least a user preference of said user, by inlaying, in images of the targetable parts, inlayable content that is chosen as a function of said at least user preferences of said user; and
transmission of requests for receiving parts of said video sequence from said play list; and
reception of requested parts.

12. A server device (600) for providing targetable content in images of a requested video sequence, wherein the device comprises:
a play list determinator (601), determining a list of parts of said requested video sequence, the list comprising identifiers of generic parts of said video sequence that are destined for any user, and targetable parts that are personalizable for a user through content inlay in images of the targetable parts;
a content inlayer (606), choosing inlayable content as a function of at least a user preference and inlaying chosen inlayable content said in images of the targetable parts.

13. A receiver device (700) for receiving targeted content in a video sequence, said device being **characterized in that** it comprises:
a transmitter for transmitting a request for receiving said video sequence;
a receiver for receiving of a play list comprising identifiers of parts of said video sequence, the parts comprising generic parts that are destined for any user, and targetable parts that are personalized for a user of said receiver device according to at least a preference of said user, thereby obtaining personalized parts, the targetable parts comprising images in which content is inlayed as a function of said at least a preference of said user; and
a transmitter for transmission of requests for receiving parts of said sequence from said list; and
a receiver for reception of requested parts.
